# EUROPEAN PATENT SPECIFICATION

(11) **EP 3 915 721 B1**
(45) Date of publication and mention of the grant of the patent: **28.12.2022**
(21) Application number: 21176184.6
(22) Date of filing: 27.05.2021
(51) Int. Cl.: B23Q 1/01, B23Q 11/00, B23Q 11/08, B23Q 39/02

(54) **MACHINE FOR THE PROCESSING OF PARTS IN A PENDULAR CYCLE**
MASCHINE ZUR BEARBEITUNG VON TEILEN IN EINEM PENDELZYKLUS
MACHINE DE TRAITEMENT DE PIÈCES DANS UN CYCLE PENDULAIRE

(30) Priority: 29.05.2020 IT 202000012811
(43) Date of publication of application: 01.12.2021
(73) Proprietor: C.M.S. S.p.A., 24019 Zogno (BG) (IT)
(72) Inventor: Alvanini, Marco, 24020 Villa di Serio (BG) (IT); Mangili, Valeria Linda, 24040 Bonate Sopra (BG) (IT); Baratelli, Cristian, 24040 Filago (BG) (IT)
(74) Representative: Biallo, Dario

(56) References cited:
- EP-A1- 3 403 796
- IT-A1- BO20 110 626
- US-A1- 2016 279 875

## Description

The present invention relates to a machine for the processing of parts in a pendular cycle.

As it is well known, there are various machines for processing parts of different materials which include the use of tools adapted to shape the parts according to requirements. Such a machine is known e.g. from Patent Document US 2016/279875 A1.

Such machines for the processing of parts can comprise two or more zones or working stations which allow the processing of the machine in a pendular cycle. The pendular cycle processing includes carrying out a succession of part processing operations using the two working stations cyclically and alternately. In this case, during the processing of a part in a first working station, a second working station can be prepared for the subsequent processing. Processing in a pendular cycle is very advantageous, as it allows a reduction in downtime and to take advantage of the processing of a part in one working station to load and unload the parts in the other working station, thus ensuring continuous machine operation.

In the present description, reference will be made to the three directions of a Cartesian plane x, y, z in which the axis x is the longitudinal development axis of the machine, the axis z is the height development axis of the machine and the axis y is the depth development axis of the machine.

The machines for the processing of parts in a pendular cycle have a portal bearing structure which defines an internal space accessible from the front where the parts are processed.

In the internal space there are two or more working stations placed flanked along the longitudinal direction of the machine and generally separated by a safety partition bulkhead. Notoriously, the upper portion of the portal bearing structure supports, by means of an upright, a cross member integral with the upright. Such an upright is movable in translation along the longitudinal development direction of the machine, carrying therewith the cross member. This cross member in turn supports a support and actuation arm for tools which extends downwards and supports a spindle coupled to a processing tool. The support and actuation arm is arranged to move along the axis z with respect to the cross member. The assembly of the support and actuation arm for tools, the spindle and the relative electrical and/or hydraulic actuations is commonly referred to as the processing head.

Thereby, by translating the movable cross member the processing head is carried and thus the tool to the various processing stations. The cross member generally also supports a tool-holder magazine carrying a plurality of tools, for example twelve. The tool-holder magazine is arranged in the longitudinal direction of the machine in a flanked position with respect to the tool mounted on the support and actuation arm for tools.

In an industrial processing machine, the processing head is movable in the three directions x, y, z. In particular, the processing head can move along the axis x integrally with the movable cross member, along the axis z and along the axis y by means of movement means of the support and actuation arm for tools with respect to the cross member.

Once the processing of a first part in a working station is finished and the operator has prepared the second working station, the processing head translates towards it so as to move on to the processing of a second part.

Therefore, the safety partition bulkhead has a limited height so as to allow the free movement of the tool between the two zones, but also the possibility to work on the entire working station. Such a feature raises a safety issue for the operator because the tool-holder magazine, during the processing in a working station near the safety partition bulkhead, could protrude over such a wall into the adjacent working station; in this case, if the operator is preparing this adjacent working station, he is exposed to the risk of accidentally coming into contact with the tools of the magazine with the consequent risk of being injured.

In order to cope with such a drawback, one currently adopted solution is to limit the processing zone in which the processing head is movable. However, such a solution causes a significant loss of useful area for working, thus decreasing the efficiency of the machine. Another solution would be to limit the operator's work to delimited zones while the tool is processing, however, this would cause a loss of the advantages of pendular cycle work.

The object of the present invention is to obviate the above-mentioned drawbacks and, in particular, to provide a machine for the processing of parts in a pendular cycle capable of increasing the processing safety for the operators and at the same time optimizing the processing itself.

These and other objects according to the present invention are achieved by providing a machine for the processing of parts in a pendular cycle as set forth in claim 1.

Further features of the machine for the processing of parts in a pendular cycle are the subject of the dependent claims.

The features and advantages of a machine for the processing of parts in a pendular cycle according to the present invention will be more apparent from the following illustrative and non-limiting description, with reference to the appended schematic drawings, in which:
- figure 1 is a front view of a machine for the processing of parts in a pendular cycle according to the invention;

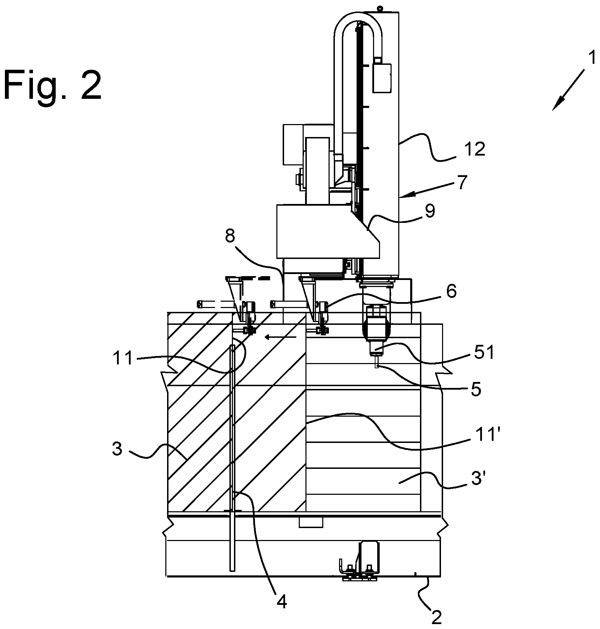

- figure 2 is a front view of a detail of the machine of figure 1;
- figure 3 is a rear perspective view of the machine of figure 1;
- figure 4 is a schematic side view of the positions of an operator in the machine of figure 1;

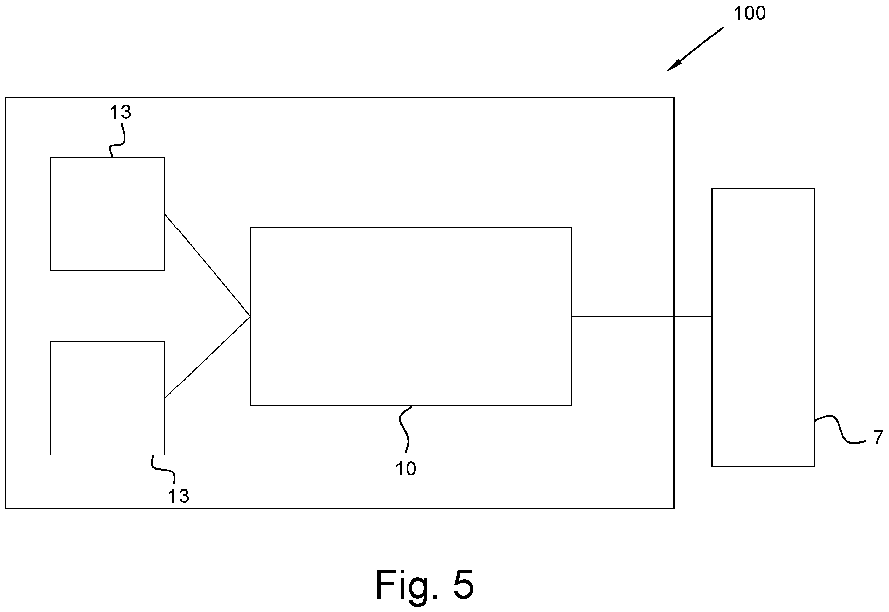

- figure 5 is a block diagram illustrating a security system included in the machine of figure 1.

With reference to the figures, a machine for the processing of parts in a pendular cycle is shown, overall indicated with 1.

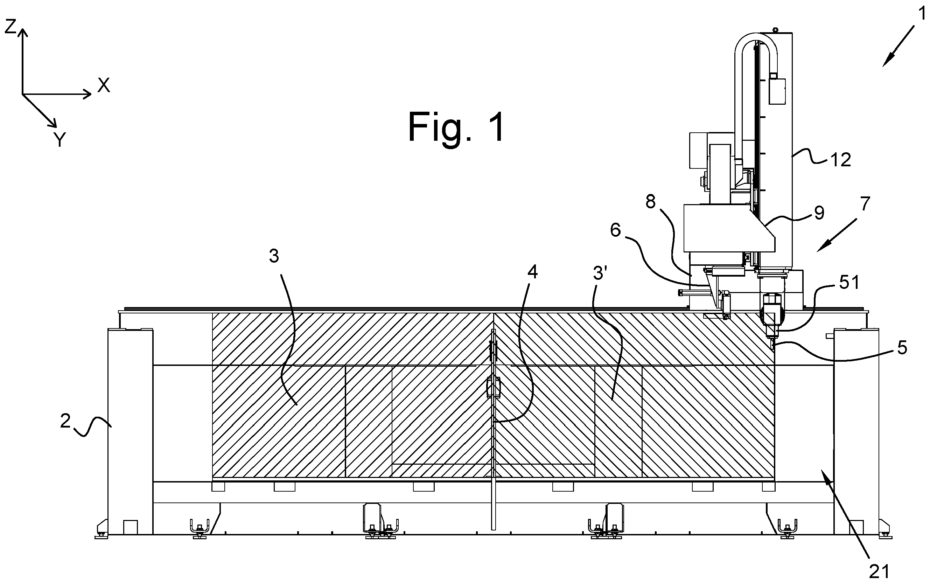

For purely exemplifying purposes, the Cartesian plane visible in figure 1 is defined, in which the axis x is the longitudinal development axis of the machine 1, the axis z is the height development axis of the machine 1 and the axis y is the depth development axis of the machine 1.

In the present discussion, the terms "front", "rear", "top", "bottom", "side", refer to the normal use condition of the machine 1.

As can be seen in figure 1, the machine 1 comprises a portal bearing structure 2 which develops in length along a longitudinal direction x and which has a first front face 21 and a second rear face 22 opposite the first face. The portal bearing structure 2 defines an internal space accessible from the front i.e., from the first front face 21.

The machine 1 further comprises at least two working stations 3, 3' housed in the internal space, arranged one after the other along the longitudinal direction x and separated from each other by a safety partition bulkhead 4, in which the parts are processed.

In the following description, particular reference will be made to a machine comprising two working stations 3, 3' however this does not exclude that a similar description applies to a machine 1 for the processing of parts in a pendular cycle having more than two working stations 3, 3'.

The machine 1 also comprises a support and actuation group 7 for tools slidingly coupled to the portal bearing structure 2 so as to be able to translate along the longitudinal direction x between the at least two working stations 3, 3' above said safety partition bulkhead 4. Furthermore, said actuation and support group 7 is coupled to a tool 5 and to at least a tool-holder magazine 6.

Tool 6 refers to any type of tool adapted to process and/or cut a material.

In detail, the support and actuation group 7 comprises an upright 8 slidingly supported by the upper portion of the portal bearing structure 2; said upright 8 is in turn integrally coupled to a cross member 9. The cross member 9 extends in the direction y between the front face 21 and the rear face 22 of the portal bearing structure 2. The upright 8 is therefore movable in translation along the longitudinal development direction x of the machine carrying the cross member 9 therewith. This cross member 9 in turn supports an arm 12 extending downwards and supports a spindle 51 coupled to the tool 5. The arm 12 is arranged to move along the axis z and the axis y with respect to the cross member 9. In the present disclosure, the assembly of the arm 12, the spindle 51, and the relative electrical and/or hydraulic actuations is indicated as processing head.

The cross member 9 also supports the at least a tool-holder magazine 6 carrying a plurality of tools, for example twelve, which ensures a great flexibility and versatility to the machine 1. The at least a tool-holder magazine 6 is, in particular, arranged along the longitudinal development direction x of the machine in a flanked position with respect to the tool 5 mounted on the arm 12.

In an embodiment not shown, the machine comprises two tool-holder magazines arranged along the longitudinal development direction of the machine in a flanked position and on opposite sides of each other with respect to the tool mounted on the arm 12.

In such a case, the two tool-holder magazines can be associated with a single cross member or with two flanked cross members.

The tool support and actuation group 7 is capable of translating so as to allow the tool 5 and the at least a tool-holder magazine 6 to pass from one working station 3 to the adjacent working station without encountering the safety partition bulkhead 4. In particular, the safety partition bulkhead 4 has a lower height than that of the portal bearing structure 2 and the tool support and actuation group 7 is able to slide above it.

The processing head is movable in the three directions x, y, z. In particular, the processing head can move along the axis x integrally with the cross member 9, along the axis z and along the axis y by means of movement means of the arm 12 with respect to the cross member.

According to the present invention, the machine 1 comprises a security system 100 comprising at least a first detection system 13 associated with a first working station 3 of the working stations 3, 3' and configured to detect, by generating a corresponding first detection signal, the presence and/or passage of a body in a monitoring zone of the first working station 3. The security system 100 further comprises a logic control unit 10 associated with the support and actuation group 7 for tools and the at least a detection system 13.

In particular, the logic control unit 10 is configured to generate a stop signal for the support and actuation group 7 for tools when the following conditions occur:
- the logic control unit 10 receives the first detection signal;
- the support and actuation group 7 is located in a second working station 3' adjacent to the first working station 3 and
- the support and actuation group 7, moving along the longitudinal direction x towards the safety partition bulkhead 4, passes a first predetermined position 11 of the second working station 3', or the support and actuation group 7 occupies a position comprised between such a first predetermined position 11 and the safety partition bulkhead 4.

The stop signal causes at least the advance of the support and actuation group 7 for tools to stop. Preferably, the stop signal also causes the return of the support and actuation group 7 for tools to a predetermined safety position of the second working station more distant from the first predetermined position 11 of the second working station 3' from the safety partition bulkhead 4.

Preferably, the stop signal also causes the operation of the tool 5 to stop.

Preferably, the stop signal is generated together with warning signals which can comprise an audible or visual signal, or the like, or a vibration signal for the operator emitted by a device wearable by the operator himself or even a combination of different types of signals depending on the features of the machine.

The monitoring zone is basically defined by the detection field of the detection system 13.

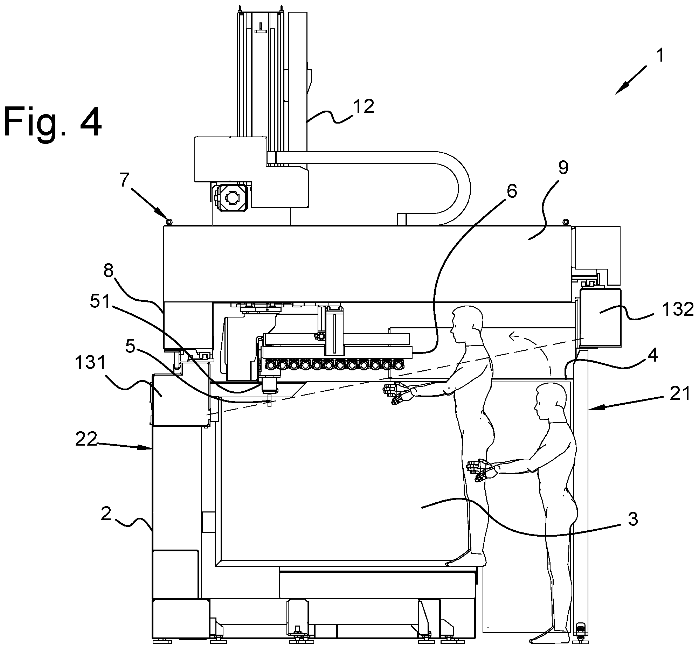

Preferably, as illustrated in figure 4, the detection system 13 comprises one or more pairs of opposite photocells in which a first photocell 131 is fixed to a rear portion of the portal bearing structure 2 and the second photocell 132 is fixed to a front portion of the portal bearing structure 2.

In such a case, the monitoring zone is defined by the detection field which the pairs of photocells 131, 132 can ensure.

In other embodiments, the detection system 13 comprises one or more sensors between radar sensors, laser sensors, ultrasonic sensors, magnetic sensors, inductive sensors, capacitive sensors. In any case, the detection system 13 is configured so that the monitoring zone is located in close proximity to the safety partition bulkhead 4, so that it can detect when the operator approaches the safety partition bulkhead 4 while the tool 5 is processing in the adjacent working station 3, 3'.

Furthermore, the detection system 13 is configured so that the monitoring zone is located at the height of the safety partition bulkhead 4 with respect to the base of the machine 1. This thereby avoids that the detections of objects which have a height lower than the height of the safety partition bulkhead 4, therefore not dangerous, can cause the support and actuation group 7 for tools to stop.

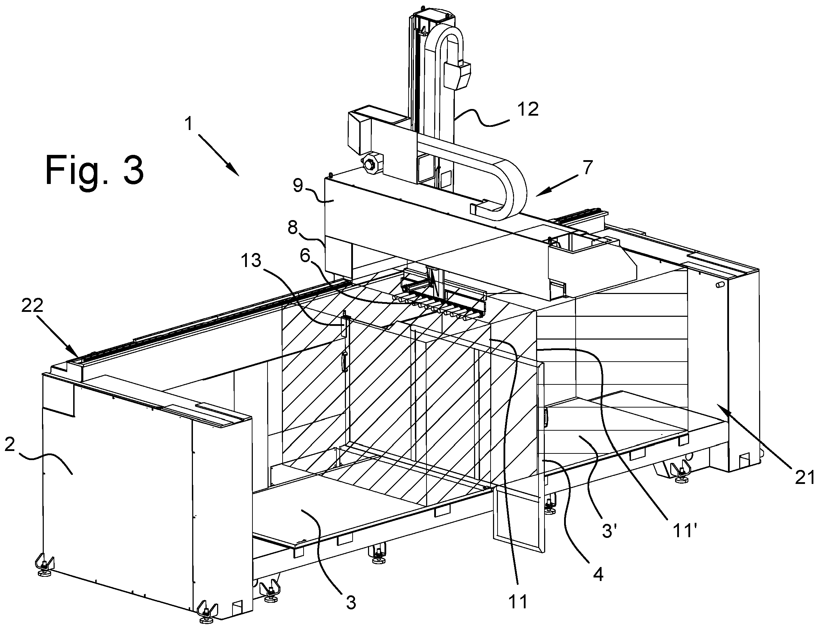

Advantageously, the first predetermined position 11, illustrated for example in figure 3, is located at a first predetermined distance from the safety partition bulkhead 4 so that when the stop signal is generated further movement of the support and actuation group 7, therefore of the tool 5 or tool-holder magazine 6, is prevented in the approach to the working station 3 where an operator is present, who in turn has been detected in the monitoring zone, thus in the vicinity of the safety partition bulkhead 4.

Preferably, as in the embodiments illustrated in the figures, the tool-holding magazine 6 is integrally coupled to the cross member 9 in a position flanked to the tool 5 along the longitudinal direction x so that when the support and actuation group 7 is in the second working station 3' the tool-holding magazine 6 is facing the first working station 3 preceding the tool 5 in the movement along the direction x towards the safety partition bulkhead 4.

In the embodiment in which the cross member 9 supports two tool-holder magazines 6 arranged along the longitudinal development direction of the machine in a flanked position and on opposite sides of each other with respect to the tool 5 mounted on the arm 12, the security system 100 further comprises a second detection system 13 associated with the second working station 3' and configured to detect, by generating a corresponding second detection signal, the presence and/or the passage of a body in a monitoring zone of the second working station 3'. In such a case, the logic control unit 10 is configured to generate a stop signal for the support and actuation group 7 for tools also when the following conditions occur:
- the logic control unit 10 receives the second detection signal;
- the support and actuation group 7 is located in the first working station 3 adjacent to the second working station 3' and
- the support and actuation group 7, moving along the longitudinal direction x towards the safety partition bulkhead 4, passes a first predetermined position 11 of the first working station 3, or the support and actuation group 7 occupies a position comprised between such a first predetermined position 11 and the safety partition bulkhead 4.

In any case, during the processing of a part by a tool 5 it is possible that the tool-holder magazine 6 protrudes beyond the safety partition bulkhead 4 invading the working station 3, 3' adjacent to the one where the processing is taking place. The security system prevents this from happening when an operator is detected in the monitoring zone of the working station 3, 3' adjacent to the one where the processing is taking place. In fact, the logic control unit 10 stops the support and actuation group for tools 7.

Furthermore, in a preferred embodiment, the logic control unit 10 is configured to emit an alert signal when the following conditions occur:
- the logic control unit 10 receives the first detection signal;
- the support and actuation group 7 is in the second working station 3' and moving along said longitudinal direction x towards the safety partition bulkhead 4, passes a second predetermined position 11', or the support and actuation group 7 occupies a position comprised between such a second predetermined position 11' and the safety partition bulkhead 4. In particular, the second predetermined position 11' is more distant from the bulkhead 4 than the first predetermined position 11, as can be seen in figure 3.

In the embodiment in which the cross member 9 supports two opposite tool-holder magazines 6 the warning signal is also emitted when the logic control unit receives the second detection signal and the support and actuation group 7 being located in the first working station 3 moving along the longitudinal direction x towards the safety partition bulkhead 4, exceeds a second predetermined position 11' of the second working station, or occupies a position comprised between said second predetermined position 11' and the safety partition bulkhead 4.

Such a feature allows the operator to be warned, when he is in a potentially dangerous zone, of the approach of the support and actuation group 7, and therefore of the tool-holder magazine 6.

Preferably, the predetermined safety position is more distant from the safety partition bulkhead 4 also than the second predetermined position 11'.

The alert signal can advantageously comprise an audible or visual signal, or the like, or a vibration signal for the operator emitted by a device wearable by the operator himself or even a combination of different types of signals depending on the features of the machine. For example, if it is a machine 1, the processing of which is very noisy, it is preferable to use a visual warning signal.

Additionally, the logic control unit 10 can be configured to increase the intensity or frequency of the alert signal as the support and actuation group 7 approaches the first predetermined position 11, until at least causing it to stop upon reaching said position.

It is also possible to include an alert signal which slows down the advance of the support and actuation group 7 so as to allow the operator time to react to the approach of the support and actuation group 7. Preferably, the security system 100 comprises at least two detection systems 13 associated with the at least two working stations 3, 3' respectively.

Thereby, the security system 100 is capable of ensuring operator safety regardless of the working station 3, 3' in which the tool support and actuation group 7 is located.

The operation of the machine for the processing of parts in a pendular cycle is clear and evident from what has been described.

From the description given, the features of the machine for the processing of parts in a pendular cycle which is the subject of the present invention are clear, as are the advantages thereof.

In fact, the security system integrated in the machine according to the present invention ensures the safety conditions for the operators and at the same time allows maximizing the working field of the tool. In fact, in the absence of operators in the monitoring zone of the working station adjacent to the processing station, the tool support and actuation group can reach up to the vicinity of the safety partition bulkhead, making use of substantially the entire extension of the working station in which it is located. Otherwise, if an operator is present in the monitoring zone, the tool support and actuation group cannot move beyond the first predetermined position without being stopped by the logic control unit.

When the security system also includes the emission of the warning signal, it then allows the operator to move from the monitoring zone before the tool support and actuation group reaches the first predetermined position and is consequently stopped, causing an avoidable loss of processing time.

## Claims

1. Machine for the processing of parts in a pendular cycle (1) comprising:
- a portal bearing structure (2) which develops in length along a longitudinal direction x and which defines an internal space accessible from the front;
- at least two working stations (3, 3') housed in said internal space, arranged one after the other along the longitudinal direction x and separated from each other by a safety partition bulkhead (4);
- a support and actuation group (7) for tools coupled to a tool (5) and to at least a tool-holder magazine (6), said support and actuation group (7) for tools being slidably coupled to said portal bearing structure (2) so as to be able to translate along the longitudinal direction x between said at least two working stations (3, 3') above said safety partition bulkhead (4);
- a security system (100) comprising:
- at least a first detection system (13) associated with a first working station (3) of said working stations (3, 3') and configured to detect, by generating a corresponding first detection signal, the presence and/or passage of a body in a monitoring zone of said first working station (3);
- a logic control unit (10) associated with said support and actuation group (7) for tools and said at least a first detection system (13), said logic control unit (10) being configured to generate a stop signal to stop at least the advance of said support and actuation group (7) for tools when the following conditions occur:
- said logic control unit (10) receives said first detection signal;
- said support and actuation group (7) is located in a second working station (3') of said working stations (3, 3') where said second working station (3') is adjacent to said first working station (3); and
- said support and actuation group (7), moving along said longitudinal direction x towards the safety partition bulkhead (4), passes a first predetermined position (11) of said second working station (3'), or said support and actuation group (7) occupies a position comprised between said first predetermined position (11) and said safety partition bulkhead (4).

2. Machine (1) according to claim 1, wherein said logic control unit (10) is configured to emit an alert signal when the following conditions occur:
- said logic control unit (10) receives said detection signal;
- said support and actuation group (7) for tools is located in said second working station (3');
- said support and actuation group (7), moving along said longitudinal direction x towards the safety partition bulkhead (4), passes a second predetermined position (11') of said second working station (3') or said support and actuation group (7) occupies a position comprised between said second predetermined position (11') and said safety partition bulkhead (4), where said second predetermined position (11') of said second working station (3') is more distant from said partition than said first predetermined position (11).

3. Machine (1) according to claim 2, wherein said logic control unit (10) is configured to increase the intensity or frequency of said alert signal with the approach of said support and actuation group (7) for tools from said second predetermined position (11') of said second working station (3') to said first predetermined position (11) of said second working station (3').

4. Machine (1) according to one of the preceding claims, wherein said logic control unit (10) is configured to generate the stop signal together with warning signals, said warning signals or said alert signal comprising an audible signal and/or a visual signal and/or a vibration signal for the operator.

5. Machine (1) according to one of the preceding claims wherein the stop signal also causes the return of the support and actuation group (7) for tools to a predetermined safety position of the second working station (3') more distant from the first predetermined position (11) of the second working station (3') from the safety partition bulkhead (4).

6. Machine (1) according to claim 5 wherein said predetermined safety position is more distant from the safety partition bulkhead (4) also than the second predetermined position (11').

7. Machine (1) according to one of the previous claims where the stop signal also causes the tool (5) to stop working.

8. Machine (1) according to one of the preceding claims comprising at least two of said detection systems associated respectively with said at least two working stations (3, 3').

9. Machine (1) according to one of the preceding claims wherein said at least one detection system (13) comprises one or more pairs of opposite photocells wherein a first photocell (131) is fixed to a rear portion of said portal bearing structure (2) and a second photocell (132) is fixed to a front portion of said portal bearing structure (2).

10. Machine (1) according to one of the preceding claims wherein the sensors of said at least one detection system (13) comprise one or more sensors chosen between radar sensors, laser sensors, ultrasonic sensors, magnetic sensors, inductive sensors, capacitive sensors.

## Patentansprüche

1. Maschine für die Bearbeitung von Teilen in einem Pendelzyklus (1), umfassend:
- eine Portalträgerstruktur (2), die sich längs in einer Längsrichtung x entwickelt und einen von vorne zugänglichen Innenraum begrenzt;
- mindestens zwei in diesem Innenraum untergebrachte Arbeitsstationen (3, 3'), die in der Längsrichtung x hintereinander angeordnet und durch ein Sicherheitstrennwandschott (4) voneinander getrennt sind;
- eine Träger- und Betätigungsgruppe (7) für Werkzeuge, die mit einem Werkzeug (5) und mindestens einem Werkzeughaltermagazin (6) gekoppelt ist, wobei die Träger- und Betätigungsgruppe (7) für Werkzeuge gleitend mit der Portalträgerstruktur (2) gekoppelt ist, um sich entlang der Längsrichtung x zwischen den mindestens zwei Arbeitsstationen (3, 3') oberhalb des Sicherheitstrennwandschotts (4) bewegen zu können;
- ein Sicherheitssystem (100), umfassend:
- mindestens ein erstes Erfassungssystem (13), das einer ersten Arbeitsstation (3) der Arbeitsstationen (3, 3') zugeordnet und so konfiguriert ist, dass es durch Erzeugen eines entsprechenden ersten Erfassungssignals das Vorhandensein und/oder den Durchgang eines Körpers in einem Überwachungsbereich der ersten Arbeitsstation (3) erfasst;
- eine logische Steuereinheit (10), die mit der Träger- und Betätigungsgruppe (7) für Werkzeuge und dem mindestens einen ersten Erfassungssystem (13) verbunden ist, wobei die logische Steuereinheit (10) so konfiguriert ist, dass sie ein Stoppsignal erzeugt, um mindestens den Vorschub der Träger- und Betätigungsgruppe (7) für Werkzeuge zu stoppen, wenn die folgenden Bedingungen eintreten:
- die logische Steuereinheit (10) das erste Erfassungssignal empfängt;
- die Träger- und Betätigungsgruppe (7) in einer zweiten Arbeitsstation (3') der Arbeitsstationen (3, 3') angeordnet ist, wobei die zweite Arbeitsstation (3') an die erste Arbeitsstation (3) angrenzt; und
- die Träger- und Betätigungsgruppe (7), die sich entlang der Längsrichtung x in Richtung des Sicherheitstrennwandschotts (4) bewegt, eine erste vorbestimmte Position (11) der zweiten Arbeitsstation (3') passiert oder die Träger- und Betätigungsgruppe (7) eine Position einnimmt, die zwischen der ersten vorbestimmten Position (11) und dem Sicherheitstrennwandschott (4) liegt.

2. Maschine (1) nach Anspruch 1, wobei die logische Steuereinheit (10) so konfiguriert ist, dass sie ein Alarmsignal ausgibt, wenn die folgenden Bedingungen eintreten:
- die logische Steuereinheit (10) das Erfassungssignal empfängt;
- die Träger- und Betätigungsgruppe (7) für Werkzeuge in der zweiten Arbeitsstation (3') angeordnet ist;
- die Träger- und Betätigungsgruppe (7), die sich entlang der Längsrichtung x in Richtung des Sicherheitstrennwandschotts (4) bewegt, eine zweite vorbestimmte Position (11') der zweiten Arbeitsstation (3') passiert oder die Träger- und Betätigungsgruppe (7) eine Position einnimmt, die zwischen der zweiten vorbestimmten Position (11') und dem Sicherheitstrennwandschott (4) liegt, wobei die zweite vorbestimmte Position (11') der zweiten Arbeitsstation (3') weiter von der Trennwand entfernt ist als die erste vorbestimmte Position (11).

3. Maschine (1) nach Anspruch 2, wobei die logische Steuereinheit (10) so konfiguriert ist, dass sie die Intensität oder Frequenz des Alarmsignals mit der Annäherung der Träger- und Betätigungsgruppe (7) für Werkzeuge von der zweiten vorbestimmten Position (11') der zweiten Arbeitsstation (3') zu der ersten vorbestimmten Position (11) der zweiten Arbeitsstation (3') erhöht.

4. Maschine (1) nach einem der vorstehenden Ansprüche, wobei die logische Steuereinheit (10) so konfiguriert ist, dass sie das Stoppsignal zusammen mit Warnsignalen erzeugt, wobei die Warnsignale oder das Alarmsignal ein akustisches Signal und/oder ein optisches Signal und/oder ein Vibrationssignal für den Bediener umfassen.

5. Maschine (1) nach einem der vorstehenden Ansprüche, wobei das Stoppsignal auch die Rückführung der Träger- und Betätigungsgruppe (7) für Werkzeuge in eine vorbestimmte, von der ersten vorbestimmten Position (11) der zweiten Arbeitsstation (3') weiter vom Sicherheitstrennwandschott (4) entfernte Sicherheitsposition der zweiten Arbeitsstation (3') bewirkt.

6. Maschine (1) nach Anspruch 5, wobei die vorbestimmte Sicherheitsposition auch vom Sicherheitstrennwandschott (4) weiter entfernt ist als die zweite vorbestimmte Position (11').

7. Maschine (1) nach einem der vorstehenden Ansprüche, wobei das Stoppsignal auch das Werkzeug (5) zum Stillstand bringt.

8. Maschine (1) nach einem der vorstehenden Ansprüche, umfassend mindestens zwei der genannten Erfassungssysteme, die jeweils den mindestens zwei Arbeitsstationen (3, 3') zugeordnet sind.

9. Maschine (1) nach einem der vorstehenden Ansprüche, wobei das mindestens eine Erfassungssystem (13) ein oder mehrere Paare von gegenüberliegenden Fotozellen umfasst, wobei eine erste Fotozelle (131) an einem hinteren Abschnitt der Portalträgerstruktur (2) befestigt ist und eine zweite Fotozelle (132) an einem vorderen Abschnitt der Portalträgerstruktur (2) befestigt ist.

10. Maschine (1) nach einem der vorstehenden Ansprüche, wobei die Sensoren des mindestens einen Erfassungssystems (13) einen oder mehrere Sensoren umfassen, die aus Radarsensoren, Lasersensoren, Ultraschallsensoren, magnetischen Sensoren, induktiven Sensoren und kapazitiven Sensoren ausgewählt sind.

## Revendications

1. Machine pour le traitement de pièces selon un cycle pendulaire (1) comprenant:
- une structure porteuse de portique (2) qui se développe en longueur le long d'une direction longitudinale x et qui définit un espace interne accessible par l'avant;
- au moins deux postes de travail (3, 3') logés dans ledit espace interne, agencés l'un après l'autre le long de la direction longitudinale x et séparés l'un de l'autre par une cloison de séparation de sécurité (4);
- un groupe de support et d'actionnement (7) pour outils, couplé à un outil (5) et à au moins un magasin porte-outils (6), ledit groupe de support et d'actionnement (7) pour outils étant couplé de manière coulissante à ladite structure porteuse de portique (2) de façon à être apte à se déplacer en translation le long de la direction longitudinale x entre lesdits au moins deux postes de travail (3, 3') au-dessus de ladite cloison de séparation de sécurité (4);
- un système de sécurité (100) comprenant:
- au moins un premier système de détection (13) associé à un premier poste de travail (3) parmi lesdits postes de travail (3, 3') et configuré pour détecter, par la génération d'un premier signal de détection correspondant, la présence et/ou le passage d'un corps dans une zone de surveillance dudit premier poste de travail (3);
- une unité de commande logique (10) associée audit groupe de support et d'actionnement (7) pour outils et audit au moins un premier système de détection (13), ladite unité de commande logique (10) étant configurée pour générer un signal d'arrêt pour arrêter au moins l'avancée dudit groupe de support et d'actionnement (7) pour outils lorsque les conditions suivantes se produisent:
- ladite unité de commande logique (10) reçoit ledit premier signal de détection;
- ledit groupe de support et d'actionnement (7) est situé dans un second poste de travail (3') parmi lesdits postes de travail (3, 3') où ledit second poste de travail (3') est adjacent audit premier poste de travail (3); et
- ledit groupe de support et d'actionnement (7), se déplaçant le long de ladite direction longitudinale x vers la cloison de séparation de sécurité (4), passe par une première position prédéterminée (11) dudit second poste de travail (3'), ou ledit groupe de support et d'actionnement (7) occupe une position comprise entre ladite première position prédéterminée (11) et ladite cloison de séparation de sécurité (4).

2. Machine (1) selon la revendication 1, dans laquelle ladite unité de commande logique (10) est configurée pour émettre un signal d'alerte lorsque les conditions suivantes se produisent:
- ladite unité de commande logique (10) reçoit ledit signal de détection;
- ledit groupe de support et d'actionnement (7) pour outils est situé dans ledit second poste de travail (3');
- ledit groupe de support et d'actionnement (7), se déplaçant le long de ladite direction longitudinale x vers la cloison de séparation de sécurité (4), passe par une seconde position prédéterminée (11') dudit second poste de travail (3') ou ledit groupe de support et d'actionnement (7) occupe une position comprise entre ladite seconde position prédéterminée (11') et ladite cloison de séparation de sécurité (4), où ladite seconde position prédéterminée (11') dudit second poste de travail (3') est plus distante de ladite cloison que ladite première position prédéterminée (11).

3. Machine (1) selon la revendication 2, dans laquelle ladite unité de commande logique (10) est configurée pour augmenter l'intensité ou la fréquence dudit signal d'alerte avec l'approche, dudit groupe de support et d'actionnement (7) pour outils, de ladite seconde position prédéterminée (11') dudit second poste de travail (3') à ladite première position prédéterminée (11) dudit second poste de travail (3').

4. Machine (1) selon l'une des revendications précédentes, dans laquelle ladite unité de commande logique (10) est configurée pour générer le signal d'arrêt conjointement avec des signaux d'avertissement, lesdits signaux d'avertissement ou ledit signal d'alerte comprenant un signal audible et/ou un signal visuel et/ou un signal de vibration pour l'opérateur.

5. Machine (1) selon l'une des revendications précédentes dans laquelle le signal d'arrêt provoque également le retour du groupe de support et d'actionnement (7) pour outils à une position de sécurité prédéterminée du second poste de travail (3') plus distante de la première position prédéterminée (11) du second poste de travail (3') par rapport à la cloison de séparation de sécurité (4).

6. Machine (1) selon la revendication 5 dans laquelle ladite position de sécurité prédéterminée est également plus distante de la cloison de séparation de sécurité (4) que la seconde position prédéterminée (11').

7. Machine (1) selon l'une des revendications précédentes où le signal d'arrêt provoque également l'arrêt du fonctionnement de l'outil (5).

8. Machine (1) selon l'une des revendications précédentes comprenant au moins deux desdits systèmes de détection associés respectivement auxdits au moins deux postes de travail (3, 3').

9. Machine (1) selon l'une des revendications précédentes dans laquelle ledit au moins un système de détection (13) comprend une ou plusieurs paires de cellules photoélectriques opposées, dans laquelle une première cellule photoélectrique (131) est fixée à une partie arrière de ladite structure porteuse de portique (2) et une seconde cellule photoélectrique (132) est fixée à une partie avant de ladite structure porteuse de portique (2).

10. Machine (1) selon l'une des revendications précédentes dans laquelle les capteurs dudit au moins un système de détection (13) comprennent un ou plusieurs capteurs choisis parmi des capteurs radar, des capteurs laser, des capteurs ultrasoniques, des capteurs magnétiques, des capteurs inductifs, des capteurs capacitifs.
